(19) **Europäisches Patentamt / European Patent Office / Office européen des brevets**

(11) **EP 1 285 807 B1**

(12) **EUROPEAN PATENT SPECIFICATION**

(45) Date of publication and mention of the grant of the patent:
**26.11.2008  Bulletin 2008/48**

(51) Int Cl.:
*B60W 10/06* (2006.01)    *B60W 10/02* (2006.01)
*B60W 30/18* (2006.01)    *B60K 23/02* (2006.01)
*F16D 48/08* (2006.01)

(21) Application number: **02078331.2**

(22) Date of filing: **09.08.2002**

(54) **Clutch control apparatus and a method for controlling the same**

Kupplungssteuervorrichtung und Verfahren zum Steuern derselben

Dispositif de commande d'embrayage et procédé pour commander celui-ci

(84) Designated Contracting States:
**DE FR GB**

(30) Priority: **10.08.2001  JP 2001243638**

(43) Date of publication of application:
**26.02.2003  Bulletin 2003/09**

(73) Proprietor: **AISIN SEIKI KABUSHIKI KAISHA
Kariya-shi, Aichi-ken (JP)**

(72) Inventors:
• **Terakawa, Tomomitsu
Anjo-shi,
Aichi-ken (JP)**
• **Shimizu, Masaru
Toyota-shi,
Aichi-ken (JP)**
• **Taguchi, Yoshinori
Anjo-shi,
Aichi-ken (JP)**
• **Haneda, Yoshitomi
Anjo-shi,
Aichi-ken (JP)**
• **Miyazaki, Takeshige
Anjo-shi,
Aichi-ken (JP)**
• **Aoyama, Yoshiyuki
Nishio-shi,
Aichi-ken (JP)**

(74) Representative: **Smith, Peter James
Serjeants
25 The Crescent
King Street
Leicester LE1 6RX (GB)**

(56) References cited:
**DE-A1- 3 941 508      DE-A1- 19 712 871
GB-A- 2 353 835       US-A- 4 685 062
US-A- 5 403 250       US-B1- 6 171 212**

**Description**

## FIELD OF THE INVENTION

This invention generally relates to a clutch control apparatus for automatically controlling a torque transmitted between a flywheel integrally rotated with an output shaft of an internal combustion engine and a clutch disc integrally rotated with an input shaft of a transmission.

## BACKGROUND OF THE INVENTION

Conventionally, clutch control apparatuses have been widely known, in which the transmission of a torque is automatically controlled between a flywheel integrally rotated with an output shaft of an internal combustion engine (hereinafter, referred to as an engine) and a clutch disc integrally rotated with an input shaft of a transmission. For example, according to this type of clutch control apparatus, the frictional load of the clutch disc applied to the flywheel is gradually increased corresponding to an increase of an engine rotational number when the vehicle starts. This means that the difference between the rotational number of the flywheel and the rotational number of the clutch disc is decreased. In other words, the slip amount of the clutch disc and the flywheel is reduced. When the difference between the rotational numbers reaches approximately zero, the clutch disc is rotated in sync with the flywheel. An additional frictional load is then applied to the flywheel from the clutch disc to prevent any slip between the flywheel and the clutch disc and transmits the torque between the flywheel and the clutch disc.

As is generally known, when the output shaft of the engine is slowly rotated, the engine is not able to generate a sufficiently large torque (driving force).

If the flywheel and the clutch disc are controlled to be rotated in sync when the output shaft of the engine is slowly rotated, the engine may not be able to generate a sufficiently large output for a load when a throttle valve is opened.

The load in this case represents the drivetrain load of a torque-transmitting path to a vehicle wheel activated by the engine. In such a case, the rotational number of the engine and the torque may not be increased such that the acceleration of the vehicle may be delayed. US-B-6171212 which defines the preamble of claims 1 and 7, discloses a clutch control system in which there is a constant feedback controlling the application of frictional load from the clutch disc to the flywheel irrespective of the operative condition of the clutch. DE-A-3941508 discloses a clutch control system in which there is similarly a constant feedback for all operative conditions of the clutch, The feedback imposes a first predetermined schedule if the engine sensor detects no power deficiency and a second predetermined schedule if the engine sensor detects a power deficiency. Always however the control of the clutch stroke is in response to a feedback signal. Both US-B-6171212 and DE-A-3941508 avoid the situation that the clutch plate and flywheel are brought into full frictional engagement at low engine speeds, but only at the expense of delaying establishment of that full engagement condition at higher engine speeds. The potential for maximum vehicle acceleration is therefore similarly delayed.

The present invention therefore seeks to provide an improved clutch control apparatus for reducing the delay of the vehicle acceleration.

## SUMMARY OF THE INVENTION

This invention provides a clutch control apparatus as defined in claim 1 herein. The invention also provides a method for controlling a clutch in a vehicle drive train as defined in claim 7 herein.

The clutch control apparatus preferably further comprises a throttle valve for adjusting an amount of an air to be inputted into the internal combustion engine, wherein the predetermined rotational number is set corresponding to a rotational number at which an output of the internal combustion engine is not sufficiently large for driving a drivetrain load when the throttle valve is opened.

## BRIEF DESCRIPTION OF THE DRAWING FIGURES

The foregoing and additional features and characteristics of the present invention will become more apparent from the following detailed description considered with reference to the accompanying drawing figures wherein:

Fig. 1 is a schematic block view illustrating a vehicle control system according to an embodiment of the present invention;

Fig. 2 is a schematic view illustrating an automated manual transmission shown in Fig. 1;

Fig. 3 is a drawing illustrating a shit pattern of a shift lever operating the automated manual transmission shown in Figs. 1 and 2;

Fig. 4 is flow chart for explaining a program performed by an electronic control unit shown in Fig. 1; and

Fig. 5 is a graph illustrating a relationship between an engine rotational number and a clutch target stroke.

## DETAILED DESCRIPTION OF THE INVENTION

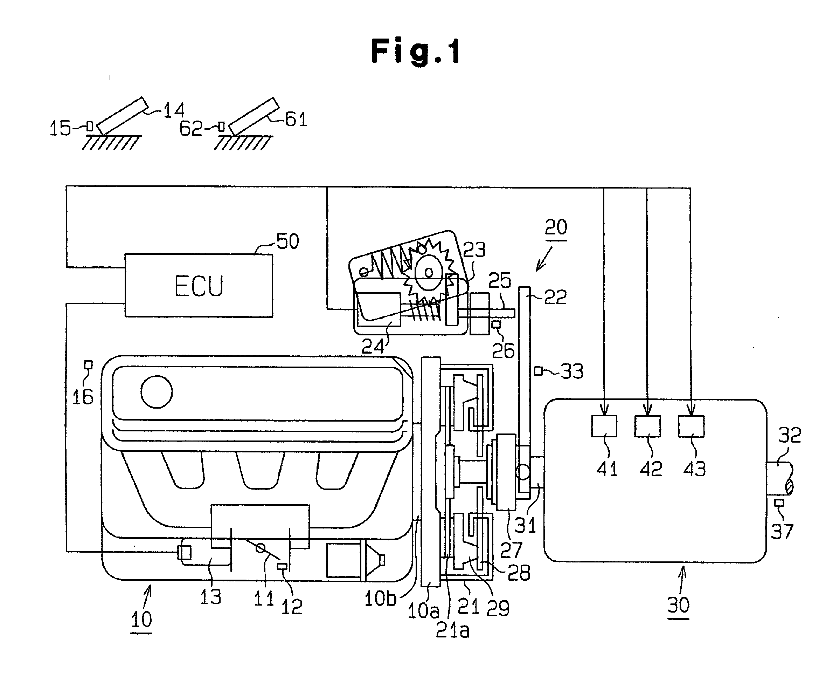

Referring to Fig. 1, a vehicle control system according to an embodiment of the present invention includes an internal combustion engine 10 (i.e. hereinafter, referred to as an engine), a flywheel 10a integrally rotated with a crankshaft 10b (i.e. an output shaft of the engine), an automatic clutch 20 assembled to the flywheel 10a, and an automated manual transmission 30. The automated manual transmission 30 is connected to the engine 10 via the automatic clutch 20.

The engine 10 is provided with a throttle valve 11 for adjusting an input air amount, a throttle sensor 12 for detecting an opening degree of the throttle valve 11 (i.e. a throttle opening degree), and an actuator 13 for the throttle valve 11 for controlling an opening / closing operation of the throttle valve 11. An accelerator pedal 14 (i.e. an acceleration operating member) depressed by a vehicle driver is equipped with an acceleration opening degree sensor 15 for detecting an operating amount of the accelerator pedal 14 (i.e. an acceleration opening degree). The actuator 13 for the throttle valve 11 is activated based upon the acceleration opening degree detected by the acceleration opening degree sensor 15. Therefore, the engine 10 can generate the engine output corresponding to the driver's operating amount of the accelerator pedal 14. The engine 10 is further provided with an engine rotational number sensor 16 for detecting an engine rotational number Ne.

The automatic clutch 20 is provided with a friction clutch 21 (a mechanical dry type-single disc clutch), a clutch lever 22, and an actuator 23 for the automatic clutch 20. The actuator 23 controls the torque transmission of the friction clutch 21 by operating the clutch lever 22.

The friction clutch 21 is provided with a clutch disc 21a integrally rotated with an input shaft 31 of the automated manual transmission 30. The torque transmission between the flywheel 10a and the clutch disc 21a, i.e. the torque transmission between the crankshaft 10b of the engine 10 and the input shaft 31 of the automated manual transmission 30, can be varied by changing the frictional load of the clutch disc 21a that is applied to the flywheel 10a.

The actuator 23 for the automatic clutch 20 is provided with a direct current motor 24 (i.e. a driving power source). The clutch lever 22 is moved in response to the forward and rearward displacements of a rod 25 operated by the motor 24. A release bearing 27 is moved via the clutch lever 22 and a diaphragm spring 28 being elastically in contact with the release bearing 27 is deformed in response to the movement of the release bearing 27. Accordingly, the frictional load of the clutch disc 21a applied to the flywheel 10a can be varied via the pressure plate 29 in response to the movement of clutch lever 22 via the rod 25 and the actuator 23 when the diaphragm spring 28 is deformed. In this way the torque can be transmitted by the friction clutch 21 from the crankshaft 10b of the engine to the input shaft 31 of the automated manual transmission 30.

More specifically, when the clutch lever 22 is moved in a direction towards the right-hand side of Fig. 1 in response to the forward movement of the rod 25 in the direction towards the right-hand side of Fig. 1, the frictional load of the clutch disc 21a applied to the flywheel 10a is decreased. On the other hand, when the clutch lever 22 is returned in a direction towards the left-hand side of Fig. 1 in response to the rearward movement of the rod 25, the frictional load of the clutch disc 21a applied to the flywheel 19a is increased.

The relationship between the displacement (i.e. the stroke) of the rod 25 and the torque transmission by the friction clutch 21 is described below.

When the rod 25 is moved forward, i.e. in a direction towards the right-hand side of Fig. 1, substantially no frictional load is eventually applied to the flywheel 10a by the clutch disc 21a. In this case, the flywheel 10a is separated from the clutch disc 21a and no torque is transmitted between the flywheel 10a and the clutch disc 21a. The stroke of the rod 25 under the above-described condition is defined as a stand-by position.

When the rod 25 is moved rearward in a direction towards the left-hand side of Fig. 1 from the stand-by position, the frictional load of the clutch disc 21a relative to the flywheel 10a is gradually increased in response to the amount of movement of the rod 25. A difference between the rotational number of the flywheel 10a and the rotational number of the clutch disc 12a (i.e. the slip amount) is generated in response to the frictional load of the clutch disc 21a relative to the flywheel 10a. The torque transmission is performed between the flywheel 10a and the clutch disc 21a based upon the slip amount. When the difference between the rotational numbers (i.e. the slip amount) reaches approximately to zero, corresponding to the increase of the frictional load by the rearward movement of the rod 25, the flywheel 10a and the clutch disc 21a are rotated in sync. Therefore, the slip amount between the flywheel 10a and the clutch disc 21a can be controlled by controlling the amount of movement of the rod 25 within a range between the stand-by position and a position at which the flywheel 10a and the clutch disc 21a are rotated in sync.

When the rod 25 is moved further rearward from the position at which the flywheel 10a and the clutch disc 21a are rotated in sync, the frictional load of the clutch disc 21a relative to the flywheel 10a is further increased corresponding to the further amount of movement of the rod 25. When the rod 25 is finally separated from the clutch lever 22, the flywheel 10a and the clutch disc 21a are rotated in sync under a condition that an additional frictional load has been applied to the flywheel 10a from the clutch disc 21a. The stroke of the rod 25 under the above-described condition is defined as a full-engagement position. That is, when the rod 25 is maintained at the full-engagement position by the actuator 23 for the automatic clutch 20, the friction clutch 21 is maintained under a full-engagement condition and the synchronized rotation of the flywheel 10a and the clutch disc 21a can be controlled.

As described above, the torque transmitted by the friction clutch 21 can be controlled in response to the stroke of the rod 25 by the actuator 23 for the automatic clutch 20, wherein a vehicle smooth starting performance and a vehicle accurate accelerating performance can be obtained. According to the embodiment of the present invention, the frictional load of the clutch disc 21a relative to the flywheel 10a is increased approximately in proportion to the stroke of the rod 25 as the rod is moved rearward within the range between the stand-by position and the full-engagement position. The automatic clutch 20 is equipped with a stroke sensor 26 for detecting the displacement (i.e. the stroke) of the rod 25. The condition of the torque transmitted by the friction clutch 21 is judged based upon a stroke St detected by the stroke sensor 26.

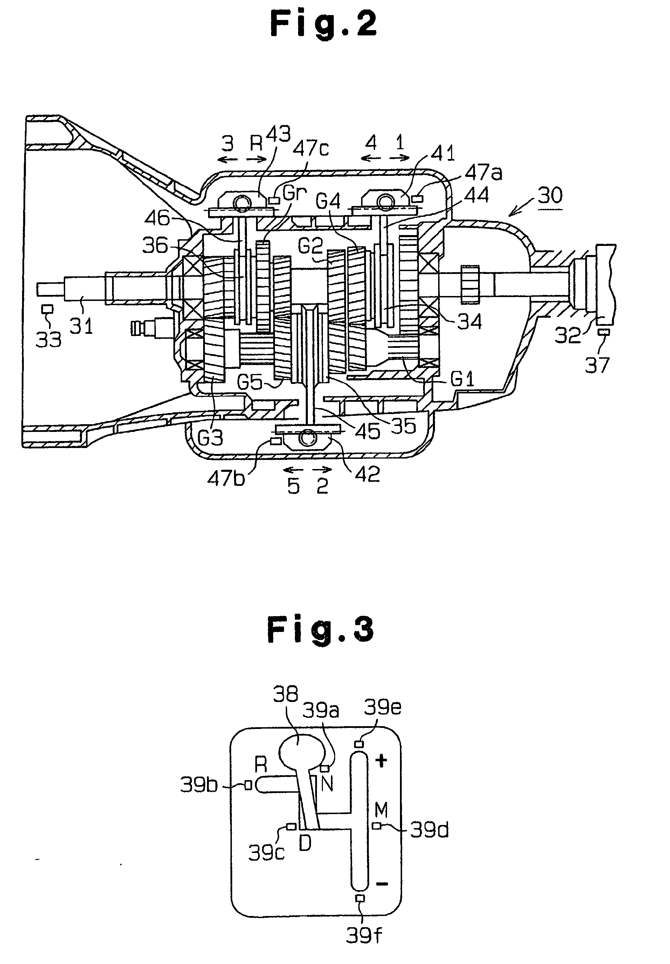

Referring to Fig. 2, the automated manual transmission 30 is a biaxial type gear transmission which is applicable for five forward shift stages and a single rearward shift stage. The transmission 30 is provided with the input shaft 31, an output shaft 32, three pairs of gear sets (G1 and G4, G2 and G5, G3 and Gr), and three sleeves 34, 35, 36. The input shaft 31 of the transmission 30 is connected to the clutch disc 21a of the friction clutch 21 so as to establish a power-transmitting path. The output shaft 32 is connected to an axle shaft (not shown) so as to establish a power-transmitting path. The transmission 30 is equipped with a rotational number sensor 33 for detecting a rotational number of the input shaft 31, i.e. for detecting an input shaft rotational number Ni. The transmission 30 is further equipped with a rotational number sensor 37 for detecting a rotational number of the output shaft 32. A vehicle speed can be obtained based upon the rotational number of the output shaft 32.

One of the pairs of gear sets, illustrated at the right side of Fig. 2, is a gear set G1 for a first shift stage and a gear set G4 for a fourth shift stage. The gear sets G1 and G4 face each other and the sleeve 34 is disposed therebetween. A second pair of gear sets, illustrated at the middle of Fig. 2, is a gear set G2 for a second shift stage and a gear set G5 for a fifth shift stage. The gear sets G2 and G5 face each other and the sleeve 35 is disposed therebetween. A third pair of gear sets, illustrated at the left side of Fig. 2, is a gear set G3 for a third shift stage and a gear set Gr for a reverse shift stage. The gear sets G3 and Gr face each other and the sleeve 36 is disposed therebetween. Each sleeve 34, 35, 36 forms a synchromesh mechanism with a synchronizer ring and a clutch hub. That is, the automated manual transmission 30 is a synchromesh-type transmission. When the sleeves 34, 35, 36 are moved towards an axial direction of the output shaft 32, a selected shift stage is performed so as to establish a power-transmitting path.

For example, when the sleeve 34 is moved toward the gear set G1 for the first shift stage, a power-transmitting path can be established via the gear set G1 for the first shift stage. When the sleeve 34 is moved to the side of the gear set G4 for the fourth shift stage, a power-transmitting path can be established via the gear set G4 for the fourth shift stage. When each sleeve 35, 36 is moved to the side of one of the pair gear sets, a power-transmitting path can be established via the gear set to which the sleeve was moved. When the sleeve is moved to a neutral position between the pair of gear sets, a power-transmitting path in the transmission 30 can not be established via any gear set.

The shift operating mechanism of the automated manual transmission 30 is provided with a shift lever 38 which is operated along a shift pattern shown in Fig. 3. Position sensors 39a, 39b, 39c, 39d, 39e, and 39f are accommodated at the shift positions of the shift lever 38 for detecting the shift position of the shift lever 38. The position sensor 39a detects the shift operation of the shift lever 38 to a N position, i.e. a neutral position in which the driving power can not be transmitted via any gear set. The position sensor 39b detects the shift operation of the shift lever 38 to an R position, i.e. a reverse position for establishing the power-transmitting path via the gear set Gr. The position sensor 39c detects the shift operation of the shift lever 38 to a D position, i.e. a drive position for establishing the power-transmitting path via any one of the gear sets G1, G2, G3, G4, and G5 under an automatic shift mode. The position sensor 39d detects the shift operation of the shift lever 38 to a M position, i.e. a manual position for establishing the power-transmitting path via any one of the gear sets G1, G2, G3, G4 and G5 under a manual shift mode. The position sensor 39e detects the shift operation of the shift lever 38 to a positive (+) position, i.e. an upper shift position for establishing the power-transmitting path via an upper shift-up gear set. The position sensor 39f detects the shift operation of the shift lever 38 to a negative (-) position, i.e. a lower shift position for establishing the power-transmitting path via a shift-down gear set. A shift stage of the automated manual transmission 30 can be switched based upon the shift position detected by the above position sensors.

As illustrated in Fig. 2, the automated manual transmission 30 is still further provided with actuators 41, 42, 43 for the shift operation. The actuator 41 for the shift operation moves the sleeve 34 via a shift fork 44. The actuator 42 for the shift operation moves the sleeve 35 via a shift fork 45. The actuator 43 for the shift operation moves the sleeve 36 via a shift fork 46. Each actuator 41, 42, 43 is equipped with a motor having a speed reduction gear, a pinion assembled to a rotational shaft of the motor, a rack engaged with the pinion and integrally moved with each shift fork 44, 45, 46. When the motors are rotatably driven, the shift forks 44, 45, 46 are moved in an axial direction of the output shaft 32 via the pinions and the racks, respectively. Therefore, the sleeves 34, 35, 36 are pushed and moved. The automated manual transmission 30 is further equipped with position sensors 47a, 47b, 47c for detecting the position of each sleeve 34, 35, 36. The condition of the power transmitting via each gear set is judged based upon the position detected by the sensors 47a, 47b, 47c.

As illustrated in Fig. 1, a brake pedal 61 (i.e. a brake operating member) depressed by the vehicle driver is equipped with a brake sensor 62 for detecting an operation of the brake pedal 61. The vehicle control system according to the embodiment of the present invention further includes an electronic control unit 50 (ECU). The ECU 50 is provided with a well-known microcomputer (CPU, not shown) as a main unit, a read only memory (ROM, not shown) for memorizing various programs and maps, a random access memory (RAM, not shown) for temporarily memorizing various data, and an electrically erasable programmable read only memory (EEPROM, not shown) for storing the data without a backup power source. The ECU 50 is connected to various sensors including the throttle sensor 12, the acceleration opening degree sensor 15, the engine rotational number sensor 16, the stroke sensor 26, the rotational number sensors 33, 37, the position sensors 39a, 39b, 39c, 39d, 39e, 39f, 47a, 47b, 47c, the brake sensor 62, and the actuator 13 for the throttle valve 11, the actuator 23 for the automatic clutch 20, the actuators 41, 42, 43 for the shift operation. The ECU 50 reads the signals detected by the various sensors so as to detect the vehicle driving conditions such as the throttle opening degree, the acceleration opening degree, the engine rotational number Ne, the torque transmitting condition by the friction clutch 21, the input shaft rotational number Ni, the vehicle speed, the shift position, and the brake operation. The ECU 50 further activates the actuators 13, 23, 41, 42, and 43 based upon the vehicle driving conditions.

More specifically, the ECU 50 reads the operated amount of the accelerator pedal 14 (i.e. the acceleration opening degree) based upon a value detected by the acceleration opening degree sensor 15. The ECU 50 activates the actuator 13 for the throttle valve 11 based upon the acceleration opening degree. Therefore, the amount of air to be inputted to the engine 10 is adjusted so as to generate an engine output corresponding to the driver's operation of the accelerator pedal 14. The ECU 50 further controls the torque transmitted by the friction clutch 21 by activating the actuator 23 for the automatic clutch 20. Therefore, the torque transmitted by the friction clutch 21 can be automatically controlled to correspond to the vehicle driving conditions. The ECU 50 further switches the shift stage for establishing the power-transmitting path by activating the actuators 41, 42, 43 for the shift operation. Therefore, the shift stage of the automated manual transmission 30 can be automatically controlled to correspond to the vehicle driving conditions.

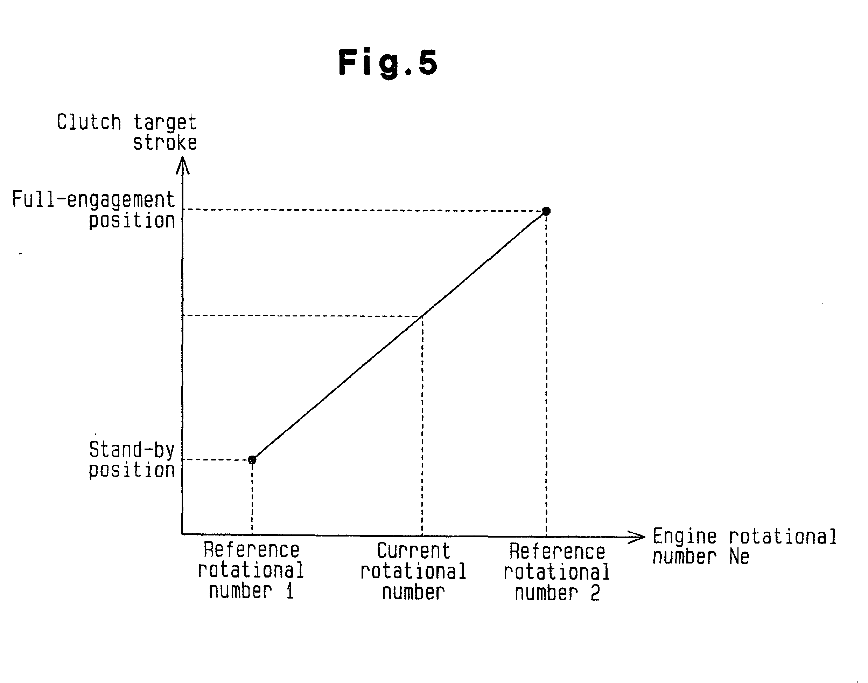

Next, the relationship between the engine rotational number Ne and a target stroke of the rod 25 (i.e. a clutch target stroke) being relevant to a clutch control as the vehicle starts is described below with reference to Fig. 5.

The clutch target stroke is defined as a stroke calculated for displacing the rod 25 to a required position. The ECU 50 outputs a driving signal to the actuator 23 for the automatic clutch 20 for approximately matching the stroke St detected by the stroke sensor 26 to the clutch target stroke. As is well known, the frictional load of the clutch disc 21a relative to the flywheel 10a is gradually increased in response to the increase of the engine rotational number Ne when the vehicle starts. The difference between the rotational number of the flywheel 10a and the rotational number of the clutch disc 21a is therefore reduced. When the difference between the rotational numbers reaches approximately to zero, the flywheel 10a and the clutch disc 21a are rotated in sync. Then, the synchronized rotation is further controlled by applying an additional frictional load of the clutch disc 21a relative to the flywheel 10a so as to prevent any slip between the flywheel 10a and the clutch disc 21a. It therefore leads to an improvement in the torque transmitted by the friction clutch 21. As described above, when the rod 25 is displaced between the stand-by position and the full-engagement position, the frictional load of the clutch disc 21a relative to the flywheel 10a can be increased approximately in proportion to the stroke St of the rod 25. Therefore, when the clutch target stroke is increased approximately in proportion to the engine rotational number Ne, the frictional load of the clutch disc 21a relative to the flywheel 10a can be increased approximately in proportion to the increase of the clutch target stroke.

As illustrated in Fig. 5, a reference rotational number 1 represents an upper limit for the engine rotational number for setting the clutch target stroke at a stroke corresponding to the stand-by position. A reference rotational number 2 represents a lower limit for the engine rotational number for setting the clutch target stroke at a stroke corresponding to the full-engagement position. The ECU 50 calculates the clutch target stroke relative to an arbitrary engine rotational number Ne between the reference rotational number 1 and the reference rotational number 2 based upon a formula (1):

(1)  Clutch target stroke = (the full-engagement position – the stand-by position) / (the reference rotational number 2 – the reference rotational number 1) x (an engine rotational number Ne – the reference rotational number 1) + the stand-by position.

The ECU 50 outputs the driving signal to the actuator 23 for the automatic clutch 20 based upon the clutch target stroke calculated as described above. Therefore, either the slip amount control or the synchronized rotation control can be effectively performed by varying the frictional load of the clutch disc 21a relative to the flywheel 10a.

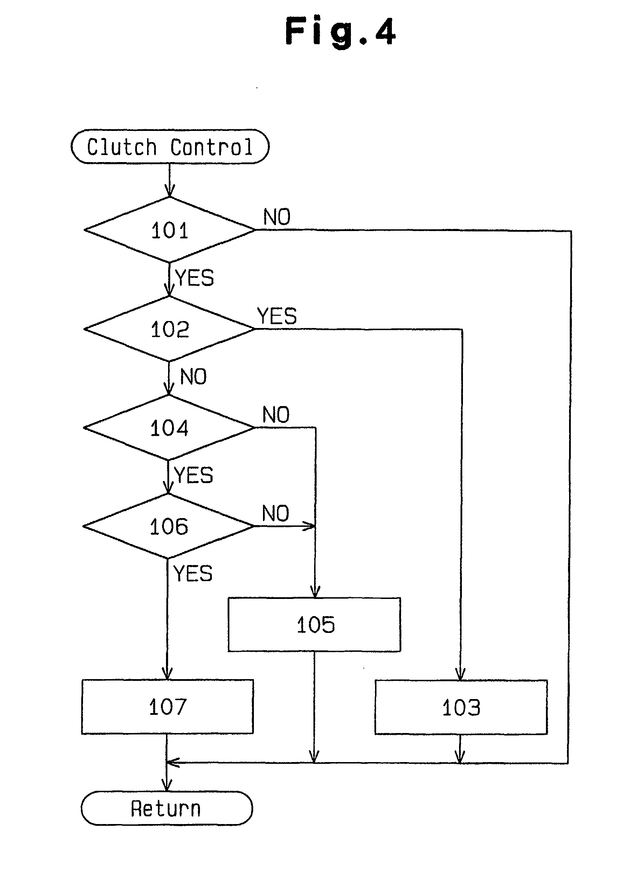

Next, the clutch control when the vehicle starts according to the embodiment of the present invention is described below with reference to a flow chart illustrated in Fig. 4. The clutch control is performed only when the shift lever 38 has been operated to the D position and is an interrupting process performed at a predetermined period of time.

Once the program proceeds to the interrupting process of the clutch control, the ECU 50 judges at step 101 whether or not it is the vehicle start condition that is being controlled. More specifically, the ECU 50 judges whether or not a current shift stage corresponds to the first shift stage with reference to the displacement positions of the sleeves 33, 34, 35 detected based upon the signals from the sensors 47a, 47b, 47c. At the same time, the ECU 50 judges whether or not the vehicle speed is lower than a predetermined vehicle speed based upon the signal detected by the rotational number sensor 37. In this case, the predetermined vehicle speed corresponds to a vehicle speed immediately after the vehicle starts. The ECU 50 then judges that the vehicle start condition is being controlled when both of the following conditions are satisfied; one is that the current shift stage corresponds to the first shift stage and the other one is that the vehicle speed is lower than the predetermined vehicle speed.

If the ECU 50 judges at step 101 that the vehicle start condition is not being controlled, the interrupting process of the clutch control is terminated straight away. On the other hand, if the ECU 50 judges at step 101 that the vehicle start condition has been controlled, the program proceeds to step 102. At step 102, the ECU 50 judges whether or not the accelerator pedal 14 has been released, the brake pedal 61 has been depressed, and the actual clutch target stroke is not greater than the stroke corresponding to the stand-by position. When the actual clutch target stroke is smaller than or equal to the stroke corresponding to the stand-by position, the torque transmission is completely interrupted between the flywheel 10a and the clutch disc 21a. More specifically, The ECU 50 judges the releasing operation of the accelerator pedal 14 based upon the signal detected by the acceleration opening degree sensor 15. The ECU 50 judges the depressing operation of the brake pedal 61 based upon the signal detected by the brake sensor 62. The ECU 50 reads the current clutch target stroke and the stroke corresponding to the stand-by position and compares the two strokes so as to judge whether or not the clutch target stroke is smaller than the stroke corresponding to the stand-by position.

When all the above-described conditions are satisfied, the ECU 50 judges that the vehicle is under a start waiting stage such as a temporary standstill stage and the program proceeds to step 103. The ECU 50 sets and maintains the clutch target stroke at the stroke corresponding to the stand-by position.

That is, the ECU 50 outputs the driving signal for driving the actuator 23 for the automatic clutch 20 for moving the rod 25 rearward until the stroke St reaches approximately to the stroke corresponding to the stand-by position. The stroke St is maintained under the above described condition. Accordingly, the torque transmission can be swiftly commenced between the flywheel 10a and the clutch disc 21a when the rod 25 is further moved rearward after the rod 25 was set at the stand-by position. That is, the vehicle start performance can be effectively improved.

On the other hand, when at least any one of the above-described conditions is not satisfied at step 102, the program proceeds to step 104. The ECU 50 judges whether or not the current engine rotational number Ne has been approximately equal to the input shaft rotational number Ni for a predetermined period of time. More specifically, the ECU 50 calculates a difference between the current engine rotational number Ne and the input shaft rotational number Ni and judges whether or not the difference has been smaller than a predetermined value $\Delta$ for a predetermined period of time. In this case, the difference between the current engine rotational number Ne and the input shaft rotational number Ni corresponds to the slip amount between the flywheel 10a and the clutch disc 21a.

When the ECU 50 judges at step 104 that the current engine rotational number Ne has not been approximately equal to the input shaft rotational number Ni for the predetermined period of time, the flywheel 10a and the clutch disc 21a are judged not to be rotating in sync. The program then proceeds to step 105, wherein the clutch target stroke is calculated and set following the formula (1) based upon the current engine rotational number Ne. The ECU 50 outputs the driving signal to the actuator 23 for the automatic clutch 20 so as to move the rod 25 until the stroke St approximately reaches the calculated clutch target stroke. Therefore, the frictional load of the clutch disc 21a applied to the flywheel 10a can be varied. That is, the slip amount between the flywheel 10a and the clutch disc 21a can be controlled.

On the other hand, when the ECU 50 judges at step 104 that the current engine rotational number Ne has been approximately equal to the input shaft rotational number Ni for the predetermined period of time, the flywheel 10a and the clutch disc 21 a are judged to be rotating in sync. The program then proceeds to step 106, wherein the ECU 50 judges whether or not the current engine rotational number Ne is greater than a predetermined rotational number NA. The predetermined rotational number NA is set corresponding to an engine rotational number at which the output of the engine 10 is not sufficiently large for driving a load when the throttle valve 11 is fully open under the condition that the rod 25 is set at the full-engagement position. The load in this case represents the drivetrain load of a torque-transmitting path to a vehicle wheel activated by the engine. More specifically, the predetermined rotational number NA is experimentally determined based upon a vehicle accelerating performance.

When the ECU 50 judges at step 106 that the current engine rotational number Ne is equal to or less than the predetermined rotational number NA, the ECU 50 judges that the output of the engine 10 can not be sufficiently large for driving the drivetrain load in response to the accelerating operation once the rod 25 is set at the full-engagement position. Therefore, the program proceeds to step 105. Although the flywheel 10a and the clutch disc 21 have been rotated in sync, the slip amount between the flywheel 10a and the clutch disc 21a can be continuously controlled following the above-described formula (1). In this case, the clutch disc 21a applies to the flywheel 10a a minimum frictional load for establishing a synchronizing rotation therebetween.

On the other hand, if the ECU 50 judges at step 106 that the current engine rotational number Ne is greater than the predetermined rotational number NA, the ECU 50 judges that the output of the engine 10 is sufficiently large for driving the drivetrain load in response to the accelerating operation when the rod 25 is set at the full-engagement position. Therefore, the program then proceeds to step 107, wherein the ECU 50 controls the clutch target stroke to gradually approach to the stroke corresponding to the full-engagement position. Therefore, the ECU 50 outputs the driving signal to the actuator 23 for the automatic clutch 20 to slowly move the rod 25 rearward until the stroke St approximately matches to the stroke corresponding to the full-engagement position, wherein the rod 25 is maintained at the full-engagement position. Therefore, an additional frictional load of the clutch disc 21a is applied to the flywheel 10a for controlling the synchronizing rotation therebetween.

As described above, the following effects can be produced according to the embodiment of the present invention.

According to the embodiment of the present invention, when the engine rotational number Ne is smaller than the predetermined rotational number NA, the slip amount between the flywheel 10a and the clutch disc 21a is continuously controlled under a condition that the flywheel 10a and the clutch disc 21a are rotated in sync. Therefore, even when the flywheel 10a and the clutch disc 21a are rotated in sync under the condition that a sufficient torque (the driving force) cannot be generated by the engine 10 rotating at a low speed, the output of the engine 10 can be sufficiently large to drive the drivetrain load. That is, when the difference between the rotational number of the flywheel 10a and the rotational number of the clutch disc 21a is generated, the engine rotational number and the engine torque can be swiftly increased. This means that the vehicle acceleration delay can be effectively reduced.

The invention is not to be construed as limited to the particular embodiment disclosed above and can be applicable for the following modified embodiments.

According to the embodiment of the present invention, the predetermined rotational number NA, which is the engine rotational number employed for selecting the clutch control mode when the flywheel 10a and the clutch disc 21a are rotated in sync, is set based upon the vehicle accelerating performance when the rod 25 is set at the full-engagement position and the throttle valve 11 is fully open. However, the predetermined rotational number NA can also be set based upon the vehicle accelerating performance when the rod 25 is set at the full-engagement position and the throttle valve 11 is semi-open with 50 percentage opening degree. In this case, the same effect can be still produced as the above described embodiment.

According to the embodiment of the present invention, the predetermined rotational number NA, which is the engine rotational number employed for selecting the clutch control mode when the flywheel 10a and the clutch disc 21a are rotated in sync, is set based upon the vehicle accelerating performance when the rod 25 is set at the full-engagement position and the throttle valve 11 is fully open. However, the predetermined rotational number NA can be set based upon the vehicle accelerating performance when the rod 25 is set at the full-engagement position and the accelerator pedal 14 has been operated with a full accelerating opening degree. The acceleration opening degree of the accelerator pedal 14 corresponds to the throttle opening degree of the throttle valve 11, wherein the acceleration opening degree and the throttle opening degree can be employed as the same reference data. In this case, the same effect can be still produced as the above described embodiment of the present invention. Further, the predetermined rotational number NA can be set based upon the vehicle accelerating performance when the rod 25 is set at the full-engagement position and the accelerator pedal 14 has been operated with a 50 percentage accelerating opening degree.

As described above, the engine rotational number at which the output of the engine 10 cannot be sufficiently large for driving the drivetrain load with the throttle valve 11 being opened corresponds to a rotational number at which the vehicle acceleration delay may occur. However, according to the modified embodiment, the vehicle accelerating delay can be effectively reduced.

According to the embodiment of the present invention, the predetermined rotational number NA, which is the engine rotational number employed for selecting the clutch control mode when the flywheel 10a and the clutch disc 21a are rotated in sync, is set based upon the vehicle accelerating performance when the rod 25 is set at the full-engagement position and the throttle valve 11 is fully open. Whereas, the predetermined rotational number NA can be set based upon an engine rotational number at which an engine stall or an engine knocking may occur when the rod 25 is set at the full-engagement position and the throttle valve 11 is fully open.

As described above, the engine rotational number at which the output of the engine 10 cannot be sufficiently large for driving the drivetrain load with the throttle valve 11 being opened corresponds to the rotational number at which the engine knocking may occur. Therefore, according to the modified embodiment, the engine knocking may be effectively prevented from occurring. Further, the engine rotational number at which the output of the engine 10 cannot be sufficiently large for driving the drivetrain load with the throttle valve 11 being opened corresponds to the rotational number at which the stall of the engine 10 may occur. Therefore, according to the modified embodiment, the engine stall may be effectively prevented from occurring.

According to the embodiment of the present invention, the invention is applied to the clutch control to be performed when the vehicle starts. However, the invention can also be applicable to the clutch control to be performed when the vehicle is running at a shift stage for a high speed. Further, the invention can be applicable to the clutch control apparatus which is provided with a creep function for a vehicle crawl when the engine is idly rotated.

Further, the invention can be applied to the vehicle control system provided with a vehicle automated driving function.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Accordingly, it is expressly intended that all such variations, changes and equivalents which fall within the scope of the present invention as defined in the claims, be embraced thereby.

**Claims**

1. A clutch control apparatus comprising:

   a flywheel (10a) integrally rotatable with an output shaft (10b) of an internal combustion engine (10);
   a clutch disc (21a) integrally rotatable with an input shaft (31) of a transmission (30); and
   a control mechanism for controlling the frictional load applied between the clutch disc (21 a) and the flywheel (10a);
   wherein the control mechanism controls a slip amount between the flywheel (10a) and the clutch disc (21a) by varying the frictional load applied between the clutch disc (21 a) and the flywheel (10a) until the clutch disc and the flywheel are rotating in sync, and when the clutch disc (21a) and the flywheel (10a) are rotating in sync applying an additional frictional load between the clutch disc and the flywheel (10a) to bring them into full frictional engagement;
   **characterized in that** when the clutch disc (21 a) and the flywheel (10a) are rotating in sync the additional frictional load is applied between the clutch disc (21 a) and the flywheel (10a) to bring them into full frictional engagement when the engine speed (Ne) is above a predetermined rotational speed (NA); and when the engine speed (Ne) is at or below the predetermined rotational speed (NA) the application of the additional frictional load is suspended.

2. A clutch control apparatus according to claim 1, further comprising a throttle valve (11) for adjusting the amount of air supplied to the internal combustion engine (10), wherein the predetermined rotational speed (NA) is set to correspond to a rotational speed at which an output of the internal combustion engine (10) is not sufficiently large to drive a drivetrain load when the throttle valve (11) is closed.

3. A clutch control apparatus according to claim 1, further comprising an acceleration operating member (14), wherein the predetermined rotational speed (NA) is set to correspond to a rotational speed at which an output of the international combustion engine (10) is not sufficiently large to drive a drivetrain load when the acceleration operating member (14) is operated.

4. A clutch control apparatus according to claim 2 or claim 3, wherein the drivetrain load includes a load of a torque transmitting path to a vehicle wheel activated by the internal combustion engine (10).

5. A clutch control apparatus according to claim 1, wherein the predetermined rotational speed (NA) is set to correspond to a rotational speed at which a stall or a knocking may occur in the internal combustion engine (10).

6. A clutch control apparatus according to any preceding claim, wherein the maximum frictional load applied between the clutch disc (21a) and the flywheel (10a) is the minimum frictional load to achieve synchronization between, the clutch disc (21 a) and the flywheel (10a) when the engine speed (Ne) of the internal combustion engine (10) is smaller than the predetermined rotational speed (NA).

7. A method for controlling a clutch in a vehicle drive train having a flywheel (10a) integrally rotated with an output shaft (10b) of an internal combustion engine (10), a transmission (30) having a pair of gear sets for a shift operation, an automatic clutch (20) assembled to the flywheel (10a) having a clutch disc (21 a) integrally rotated with an input shaft (31) of the transmission (30), a rod (25) to be moved rearward and forward for applying a frictional load of the clutch disc (21 a) to the flywheel (10a), and an electronic control unit (ECU 50) for performing various controls, wherein the method comprises varying the frictional load of the clutch disc (21a) applied to the flywheel (10a) in response to the movement of the rod so as to control a slip amount between the flywheel (10a) and the clutch disc (21 a), such that when the flywheel (10a) and the clutch disc (21 a) are rotating in sync an additional frictional load is applied from the clutch disc (21 a) to the flywheel (10a) in response to the movement of the rod (25); **characterized in that** the electronic control unit (ECU 50):

    determines whether or not a vehicle start condition is being controlled (step 101);
    determines whether or not the vehicle has been under a start waiting stage when the vehicle start condition is being controlled (step 102);
    determines whether or not a rotational speed (Ne) of the output shaft (10b) of the internal combustion engine (10) has been substantially equal to a rotational speed (Ni) of the input shaft (31) of the transmission (30) for a predetermined period of time when the vehicle has not been under the start waiting stage (step-104);
    determines whether or not the rotational speed (Ne) of the output shaft (10b) of the internal combustion engine (10) is greater than a predetermined rotational speed (NA) when the rotational speed (Ne) of the output shaft (10b) of the internal combustion engine (10) has been substantially equal to the rotational speed (Ni) of the input shaft (31) of the transmission (30) for the predetermined period of time (step 106);
    and, when the clutch disc (21 a) and the flywheel (10a) are rotating in sync, the electronic control unit (50):

        controls the application of the additional frictional.load between the clutch disc (21a) and the flywheel (10a) so as to bring them into full frictional engagement when the engine speed (Ne) is above a predetermined rotational speed (NA); and
        suspends the application of the additional frictional load between the clutch disc (21 a) and the flywheel (10a) when the engine speed (Ne) is at or below the predetermined rotational speed (NA).

8. A method for controlling a clutch according to claim 7, wherein the determination of when the vehicle start condition is being controlled occurs when a current shift stage of the transmission (30) corresponds to a first shift stage and when a vehicle speed is lower than a predetermined vehicle speed corresponding to a vehicle speed immediately after the vehicle starts.

9. A method for controlling a clutch according to claim 7 or claim 8, wherein the determination of when the vehicle has been under the start waiting stage occurs when an acceleration operating member (14) has been released, a brake operating member (61) has been depressed, and a clutch target stroke of the rod (25) is smaller than a stroke corresponding to a stand-by position at which the frictional load of the clutch disc (21a) applied to the flywheel (10a) reaches substantially zero in response to the movement of the rod (25) from a clutch engagement position, and wherein during the start waiting stage the electronic control unit (ECU 50) sets and maintains the clutch target stroke at the stroke corresponding to the stand-by position.

**Patentansprüche**

1. Kupplungssteuerungsvornchtung, enthaltend:

    ein Schwungrad (10a), das integral mit einer Ausgangswelle (10b) eines Verbrennungsmotors (10) drehbar ist;
    eine Kupplungsscheibe (21 a), die integral mit einer Eingangswelle (31) eines Getriebes (30) drehbar ist; und
    einen Steuermechanismus zum Steuern der Reiblast, die zwischen der Kupplungsscheibe (21a) und dem Schwungrad (10a) aufgebracht wird;

wobei der Steuerungsmechanismus eine Schlupfmenge zwischen den Schwungrad (10a) und der Kupplungsscheibe (21 a) durch Variieren der Reiblast, die zwischen der Kupplungsscheibe (21a) und dem Schwungrad (10a) aufgebracht wird, steuert, bis die Kupplungsscheibe und das Schwungrad sich synchron drehen, und wobei, wenn die Kupplungsscheibe (21 a) und das Schwungrad (10a) sich synchron drehen, eine zusätzliche Reiblast zwischen der Kupplungsscheibe und dem Schwungrad (10a) aufgebracht wird, um sie in einen vollständigen Reibeingriff zu bringen;

**dadurch gekennzeichnet, dass** die zusätzliche Reiblast zwischen der Kupplungsscheibe (21 a) und dem Schwungrad (10a) aufgebracht wird, wenn die Kupplungsscheibe (21 a) und das Schwungrad (10a) sich synchron drehen, um sie in einen vollständigen Reibeingriff zu bringen, wenn die Motorgeschwindigkeit (Ne) über eine vorbestimmen Rotationsgeschwindigkeit (NA) ist; und das Aufbringen der zusätzlichen Reiblast ausgesetzt wird, wenn die Motorgeschwindigkeit (Ne) auf oder unter der vorbestimmten Rotationsgeschwindigkeit (NA) ist.

2. Kupplungssteuerungsvornchtung nach Anspruch 1, weiter enthaltend ein Drosselventil (11) zum Einstellen der dem Verbrennungsmotor (10) zugeführten Menge Luft, wobei die vorbestimmte Rotationsgeschwindigkeit (NA) festgesetzt wird, dass sie einer Rotationsgeschwindigkeit entspricht, bei der eine Ausgabe des Verbrennungsmotors (10) nicht ausreichend groß ist zum Antreiben einer Antriebsstranglast, wenn das Drosselventil (11) geschlossen ist.

3. Kupplungssteuerungsvorrichtung nach Anspruch 1, weiter enthaltend ein Beschleunigungsbetätigungselement (14), wobei die vorbestimmte Rotationsgeschwindigkeit (NA) festgesetzt ist, dass sie einer Rotationsgeschwindigkeit entspricht, bei der eine Ausgabe des Verbrennungsmotors (10) nicht ausreichend groß zum Antreiben einer Antriebsstranglast ist, wenn das Beschleunigungsbetätigungselement (14) betätigt wird.

4. Kupplungssteuerungsvorrichtung nach Anspruch 2 oder 3, wobei die Antriebsstranglast eine Last eines Drehmomentübertragungswegs an ein Fahrzeugrad enthält, der durch den Verbrennungsmotor (10) aktiviert wird.

5. Kupplungssteuerungsvorrichtung nach Anspruch 1, wobei die vorbestimmte Rotationsgeschwindigkeit (NA) festgesetzt ist, dass sie einer Rotationsgeschwindigkeit entspricht, bei der ein Strömungsabriss oder ein Klopfen im Verbrennungsmotor (10) auftreten kann.

6. Kupplungssteuerungsvorrichtung nach einem der vorhergehenden Ansprüche, wobei die maximale Reiblast, die zwischen der Kupplungsscheibe (21a) und dem Schwungrad (10a) aufgebracht wird, die minimale Reiblast zum Erzielen einer Synchronisation zwischen der Kupplungsscheibe (21a) und dem Schwungrad (10a) ist, wenn die Motorgeschwindigkeit (Ne) des Verbrennungsmotors (10) kleiner als die vorbestimmte Rotationsgeschwindigkeit (NA) ist.

7. Verfahren zum Steuern einer Kupplung in einem Fahrzeugantriebsstrang, der ein Schwungrad (10a) aufweist, das integral mit einer Ausgangswelle (10b) eines Verbrennungsmotors (10) gedreht wird, ein Getriebe (30), das ein Paar von Zahnradsätzen für einen Schaltvorgang hat, eine Automatikkupplung (20), die an dem Schwungrad (10a) angebracht ist, die eine Kupplungsscheibe (21a) aufweist, die integral mit einer Eingangswelle (31) des Getriebes (30) gedreht wird, eine Stange (25), die rückwärts und vorwärts zum Aufbringen einer Reiblast der Kupplungsscheibe (21a) auf das Schwungrad (10a) zu bewegen ist, und eine elektronische Steuereinheit (ECU 50) zum Durchführen von verschiedenen Steuerungen, wobei das Verfahren das Variieren der Reiblast der Kupplungsscheibe (21a), die auf das Schwungrad (10a) aufgebracht wird, entsprechend der Bewegung der Stange enthält, so dass eine Schlupfmenge zwischen dem Schwungrad (10a) und der Kupplungsscheibe (21a) gesteuert wird, so dass, wenn das Schwungrad (10a) und die Kupplungsscheibe (21a) sich synchron drehen, eine zusätzliche Reiblast von der Kupplungsscheibe (21a) auf das Schwungrad (10a) in Abhängigkeit von der Bewegung der Stange (25) aufgebracht wird;

**dadurch gekennzeichnet, dass** die elektronische Steuereinheit (ECU 50):

bestimmt, ob ein Fahrzeugstartzustand gesteuert wird oder nicht (Schritt 101);
bestimmt, ob das Fahrzeug unter einem Startwartzustand war, wenn der Fahrzeugstartzustand gesteuert wird, oder nicht (Schritt 102);
bestimmt, ob eine Rotationsgeschwindigkeit (Ne) der Ausgangswelle (10b) des Verbrennungsmotors (10) im Wesentlichen gleich einer Rotationsgeschwindigkeit (Ni) der Eingangswelle (31) des Getriebes (30) während einer vorbestimmten Zeitdauer war oder nicht, wenn das Fahrzeug nicht unter dem Startwartzustand war (Schritt 104);
bestimmt, ob die Rotationsgeschwindigkeit (Ne) der Ausgangswelle (10b) des Verbrennungsmotors (10) größer als eine vorbestimmte Rotationsgeschwindigkeit (NA) ist oder nicht, wenn die Rotationsgeschwindigkeit (Ne) der Ausgangswelle (10b) des Verbrennungsmotors (10) im Wesentlichen gleich der Rotationsgeschwindigkeit (Ne) der Eingangswelle (31) des Getriebes (30) während der vorbestimmten Zeitdauer war (Schritt 106); und, wenn die Kupplungsscheibe (21a) und das Schwungrad (10a) sich synchron drehen, die elektronische Steuereinheit (50):

das Aufbringen der zusätzlichen Reiblast zwischen der Kupplungsscheibe (21 a) und dem Schwungrad (10a) steuert, so dass sie in einen vollständigen Reibeingriff gebracht werden, wenn die Motorgeschwindigkeit (Ne) über einer vorbestimmten Rotationsgeschwindigkeit (NA) ist; und das Aufbringen der zusätzlichen Reiblast zwischen Kupplungsscheibe (21 a) und dem Schwungrad (10a) aussetzt, wenn die Motorgeschwindigkeit (Ne) auf oder unter der vorbestimmten Rotationsgeschwindigkeit (NA) ist.

8. Verfahren zum Steuern einer Kupplung nach Anspruch 7, wobei das Bestimmen, wann der Fahrzeugstartzustand gesteuert wird, auftritt, wenn eine gegenwärtige Schaltstufe des Getriebes (30) einer ersten Schaltstufe entspricht und eine Fahrzeuggeschwindigkeit geringer als eine vorbestimmte Fahrzeuggeschwindigkeit ist, die einer Fahrzeuggeschwindigkeit entspricht, unmittelbar nachdem das Fahrzeug startet.

9. Verfahren zum Steuern einer Kupplung nach Anspruch 7 oder Anspruch 8, wobei das Bestimmen, wann das Fahrzeug unter dem Startwartzustand war, auftritt, wenn ein Beschleunigungsbetätigungselement (14) freigegeben worden ist, ein Bremsbetätigungselement (61) niedergedrückt ist und ein Kupplungszielhub der Stange (25) kleiner als ein Hub ist, der einer Standby-Position entspricht, bei der die Reiblast der Kupplungsscheibe (21a), die auf das Schwungrad (10a) aufgebracht wird, im Wesentlichen Null erreicht, in Abhängigkeit von der Bewegung der Stange (25) aus einer Kupplungseingriffsposition, und wobei während des Startwartzustands die elektronische Steuereinheit (ECU 50) den Kupplungszielhub festsetzt und beibehält auf dem Hub, der der Standby-Position entspricht.

## Revendications

1. Dispositif de commande d'embrayage comprenant :

un volant (10a) capable de tourner d'un seul tenant avec un arbre de sortie (10b) d'un moteur à combustion interne (10) ; un disque d'embrayage (21a) capable de tourner d'un seul tenant avec un arbre d'entrée (31) d'une transmission (30) ; et un mécanisme de commande pour commander la charge de frottement appliquée entre le disque d'embrayage (21a) et le volant (10a) ; dans lequel le mécanisme de commande commande une quantité de glissement entre le volant (10a) et le disque d'embrayage (21a) en modifiant la charge de frottement appliquée entre le disque d'embrayage (21a) et le volant (10a) jusqu'à ce que le disque d'embrayage et le volant tournent en synchronisation et, lorsque le disque d'embrayage (21a) et le volant (10a) tournent en synchronisation, en appliquant une charge de frottement supplémentaire entre le disque d'embrayage et le volant (10a) pour les amener totalement en prise par frottement ; **caractérisé en ce que**, lorsque le disque d'embrayage (21a) et le volant (10a) tournent en synchronisation, la charge de frottement supplémentaire est appliquée entre le disque d'embrayage (21a) et le volant (10a) pour les amener totalement en prise par frottement lorsque la vitesse de moteur (Ne) est supérieure à une vitesse de rotation prédéterminée (NA) ; et lorsque la vitesse de moteur (Ne) est égale ou inférieure à la vitesse de rotation prédéterminée (NA), l'application de la charge de frottement supplémentaire est suspendue.

2. Dispositif de commande d'embrayage selon la revendication 1, comprenant en outre un papillon des gaz (11) pour ajuster la quantité d'air délivré au moteur à combustion interne (10), dans lequel la vitesse de rotation prédéterminée (NA) est fixée pour correspondre à une vitesse de rotation à laquelle une sortie du moteur à combustion interne (10) n'est pas suffisamment grande pour entraîner une charge de chaîne cinématique lorsque le papillon des gaz (11) est fermé.

3. Dispositif de commande d'embrayage selon la revendication 1, comprenant en outre un élément d'actionnement d'accélération (14), dans lequel la vitesse de rotation prédéterminée (NA) est fixée pour correspondre à une vitesse de rotation à laquelle une sortie du moteur à combustion interne (10) n'est pas suffisamment grande pour entraîner une charge de chaîne cinématique lorsque l'élément d'actionnement d'accélération (14) est mis en oeuvre.

**4.** Dispositif de commande d'embrayage selon la revendication 2 ou la revendication 3, dans lequel la charge de chaîne cinématique comprend une charge d'un trajet de transmission de couple vers une roue de véhicule activée par le moteur à combustion interne (10).

**5.** Dispositif de commande d'embrayage selon la revendication 1, dans lequel la vitesse de rotation prédéterminée (NA) est fixée pour correspondre à une vitesse de rotation à laquelle un calage ou un cognement peut se produire dans le moteur à combustion interne (10).

**6.** Dispositif de commande d'embrayage selon l'une quelconque des revendications précédentes, dans lequel la charge de frottement maximum appliquée entre le disque d'embrayage (21a) et le volant (10a) est la charge de frottement minimum pour obtenir la synchronisation entre le disque d'embrayage (21a) et le volant (10a) lorsque la vitesse de moteur (Ne) du moteur à combustion interne (10) est inférieure à la vitesse de rotation prédéterminée (NA).

**7.** Procédé pour commander un embrayage dans une chaîne cinématique de véhicule comportant un volant (10a) tournant d'un seul tenant avec un arbre de sortie (10b) d'un moteur à combustion interne (10), une transmission (30) comportant deux ensembles d'engrenages pour une opération de changement de vitesse, un embrayage automatique (20) assemblé au volant (10a) comportant un disque d'embrayage (21a) tournant d'un seul tenant avec un arbre d'entrée (31) de la transmission (30), une tige (25) destinée à être déplacée vers l'arrière et vers l'avant pour appliquer une charge de frottement du disque d'embrayage (21a) au volant (10a), et une unité de commande électronique (ECU 50) pour effectuer diverses commandes, dans lequel le procédé comprend la modification de la charge de frottement du disque d'embrayage (21a) appliquée au volant (10a) en réponse au mouvement de la tige de manière à commander une quantité de glissement entre le volant (10a) et le disque d'embrayage (21a), de sorte que, lorsque le volant (10a) et le disque d'embrayage (21a) tournent en synchronisation, une charge de frottement supplémentaire soit appliquée du disque d'embrayage (21a) au volant (10a) en réponse au mouvement de la tige (25) ;

**caractérisé en ce que** l'unité de commande électronique (ECU 50) :

détermine si, oui ou non, une condition de démarrage de véhicule est commandée (étape 101) ;

détermine si, oui ou non, le véhicule a été dans une phase d'attente de démarrage lorsque la condition de démarrage de véhicule est commandée (étape 102) ;

détermine si, oui ou non, une vitesse de rotation (Ne) de l'arbre de sortie (10b) du moteur à combustion interne (10) a été sensiblement égale à une vitesse de rotation (Ni) de l'arbre d'entrée (31) de la transmission (30) pendant une période de temps prédéterminée lorsque le véhicule n'a pas été dans la phase d'attente de démarrage (étape 104) ;

détermine si, oui ou non, la vitesse de rotation (Ne) de l'arbre de sortie (10b) du moteur à combustion interne (10) est supérieure à une vitesse de rotation prédéterminée (NA) lorsque la vitesse de rotation (Ne) de l'arbre de sortie (10b) du moteur à combustion interne (10) a été sensiblement égale à la vitesse de rotation (Ni) de l'arbre d'entrée (31) de la transmission (30) pendant la période de temps prédéterminée (étape 106) ;

et, lorsque le disque d'embrayage (21a) et le volant (10a) tournent en synchronisation, l'unité de commande électronique (50) :

commande l'application de la charge de frottement supplémentaire entre le disque d'embrayage (21a) et le volant (10a) de manière à les amener totalement en prise par frottement lorsque la vitesse de moteur (Ne) est supérieure à une vitesse de rotation prédéterminée (NA) ; et

suspend l'application de la charge de frottement supplémentaire entre le disque d'embrayage (21a) et le volant (10a) lorsque la vitesse de moteur (Ne) est égale ou inférieure à la vitesse de rotation prédéterminée (NA).

**8.** Procédé pour commander un embrayage selon la revendication 7, dans lequel la détermination si la condition de démarrage de véhicule est commandée a lieu lorsqu'un rapport de vitesse actuel de la transmission (30) correspond à un premier rapport de vitesse et lorsqu'une vitesse de véhicule est inférieure à une vitesse de véhicule prédéterminée correspondant à une vitesse de véhicule immédiatement après le démarrage du véhicule.

**9.** Procédé pour commander un embrayage selon la revendication 7 ou la revendication 8, dans lequel la détermination si le véhicule a été dans la phase d'attente de démarrage a lieu lorsqu'un élément d'actionnement d'accélération (14) a été relâché, un élément d'actionnement de frein (61) a été enfoncé, et une course cible d'embrayage de la tige (25) est inférieure à une course correspondant à une position d'attente à laquelle la charge de frottement du disque d'embrayage (21a) appliquée au volant (10a) atteint sensiblement zéro en réponse au mouvement de la tige (25) à partir d'une position d'engagement d'embrayage, et dans lequel, dans la phase d'attente de démarrage, l'unité de commande électronique (ECU 50) fixe et maintient la course cible d'embrayage à la course correspondant à la position d'attente.

# Fig.1

EP 1 285 807 B1

# Fig.2

# Fig.3

# Fig.4

# Fig.5

Clutch target stroke

Full-engagement position

Stand-by position

Reference rotational number 1

Current rotational number

Reference rotational number 2

Engine rotational number Ne

EP 1 285 807 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6171212 B

- DE 3941508 A